# EUROPÄISCHE PATENTANMELDUNG

(11) **EP 1 157 901 A2**
(43) Veröffentlichungstag der Anmeldung: **28.11.2001**
(21) Anmeldenummer: 01110146.6
(22) Anmeldetag: 04.05.2001
(51) Int. Cl.: B60R 21/16

(54) **Gassackmodul für Fahrzeuginsassenrückhaltesysteme**

(30) Priorität: 23.05.2000 DE 20009237 U
(71) Anmelder: TRW Occupant Restraint Systems GmbH & Co. KG, 73553 Alfdorf (DE)
(72) Erfinder: Heigl, Jürgen, 73560 Böbingen (DE)
(74) Vertreter: Sties, Jochen, Dipl.-Ing.

(57) **Zusammenfassung**

Die Erfindung betrifft ein Gassackmodul, insbesondere ein Seitengssackmodul für Fahrzeuginsassenrückhaltesysteme, mit mindestens einer ersten Gewebelage (10, 12), die eine Wandung eines Gassacks bilden, mit einer Gaslanze (16), in der sich Öffnungen (18) zum Einströmen eines Gases in den Gassack befinden, und mit mindestens einer zweiten Gewebelage (24), die sich im Bereich der Öffnungen (18) befindet und die durch einen Teil der Schußfäden der ersten Gewebelage (10, 12) gebildet ist.

## Beschreibung

Die Erfindung betrifft ein Gassackmodul, insbesondere ein Seitengassackmodul, mit zwei Gewebelagen, die die Wandung eines Gassacks bilden.

Ein solches Gassackmodul steht mit einem Gasgenerator in Verbindung, der nach seiner Aktivierung ein unter Druck stehendes, heißes Gas bereitstellt, das in den Gassack geleitet wird, um diesen zu entfalten. Die heißen Gase können durch ihre hohe Temperatur das Material der Gassackwandung beschädigen, so daß die Gasdurchlässigkeit des Gassacks in unerwünschter Weise verändert und so seine Rüchhalte-funktion beeinträchtigt werden kann. Durch die unkontrollierte Freisetzung der heißen Gase kann es auch zu Verbrennungsverletzungen des Fahrzeuginsassen kommen.

Um das Gassackgewebe bei Zünden der Treibladung nicht zu beschädigen, gibt es verschiedene Konzepte, die bewirken, daß das heiße Gas die Gassackwandung nicht beschädigen kann. Bei einem Konzept wird ein wärmeabbauendes Mittel verwendet, das auf der Innenfläche der Wandung des Gassacks vorgesehen ist. Das wärmeabbauende Mittel unterliegt bei einem Kontakt mit den heißen Gasen einer physikalischen oder chemischen Änderung seines Aggregatzustandes oder seiner Struktur, wobei Wärmeenergie aufgenommen wird. Dadurch wird die Temperatur der Gase herabgesetzt, bevor die Gase in Kontakt mit dem Gewebe kommen, aus dem die Gassackwandung hergestellt ist. Das wärmeabbauende Mittel können Kunststoffäden sein, die in das Gassackgewebe eingebunden sind. Diese können entweder aus einem Material sein, das einen niedrigeren Schmelzpunkt hat als das Gassackmaterial, oder es können Fäden aus dem gleichen Material wie das des Gassacks sein, nur mit aufgerauhter und dadurch vergrößerter Oberfläche. Durch die niedrigere Schmelztemperatur oder die größere Kontaktoberfläche beginnen die eingewobenen Fäden vor der Gassackwandung zu schmelzen. Bei einem anderen Konzept wird die Innenwand des Gassacks mit einer Substanz bestäubt, die sich ab einer bestimmten Temperatur zersetzt und die dem Gas die für die Zersetzungsreaktion notwendige Wärmeenergie entzieht. Bei einem weiteren Konzept wird eine separate Gewebelage in das Innere des Gassacks eingelegt, die einen direkten Kontakt des heißen Gases mit der Wandung des Gassacks verhindert.

Bei allen diesen Konzepten wird, um einen Flammschutz für die Wandung des Gassacks zu erzielen, ein von der eigentlichen Wandung verschiedenes Material in den Gassack eingebracht. Dies erfordert einen deutlich erhöhten Produktionsaufwand.

Die Aufgabe der Erfindung besteht darin, einen Gassack der eingangs genannten Art dahingehend weiterzubilden, daß ein Flammschutz mit einem geringeren Aufwand und geringeren Kosten erzielt wird.

Zur Lösung dieser Aufgabe ist erfindungsgemäß ein Gassackmodul, insbesondere ein Seitengassackmodul für Fahrzeuginsassenrückhaltesysteme, vorgesehen, mit mindestens einer ersten Gewebelage, die eine Wandung eines Gassacks bildet, mit einer Gaslanze, in der sich Öffnungen zum Einströmen eines Gases in den Gassack befinden, und mit mindestens einer zweiten Gewebelage, die sich im Bereich der Öffnungen befindet und die durch einen Teil der Schußfäden der ersten Gewebelage gebildet ist. Das der Erfindung zugrundliegende Konzept besteht darin, einen Teil der Schußfäden der Gassackwandung "abzuzweigen", um eine Flammschutz-Gewebelage zu erhalten. Das einströmende heiße Gas trifft so zuerst auf die zweite Gewebelage im Bereich der Öffnungen und schützt die eigentliche Gassackwandung vor dem ausströmenden heißen Gas. Die zusätzliche Gewebelage kann durch die hohe Gastemperatur zerstört werden, ohne daß die Rückhaltefunktion des Gassacks dadurch beeinträchtigt wird. Da die als Flammschutz dienende zweite Gewebelage kein separates Teil ist, sondern beim Weben der Wandung des Gassacks in demselben Arbeitsgang hergestellt werden kann, ergeben sich besonders geringe Herstellkosten.

Vorteilhafte Ausgestaltungen der Erfindung ergeben sich aus den Unteransprüchen.

Die Erfindung wird nachfolgend unter Bezugnahme auf eine Ausführungsform beschrieben, die in den beigefügten Zeichnungen dargestellt ist. In diesen zeigen:
- Fig. 1 ein erfindungsgemäßes Seitengassackmodul in einem Längsschnitt;
- Fig. 2 das erfindungsgemäße Seitengassackmodul von Figur 1 in einem Querschnitt entlang der Linie A-A.

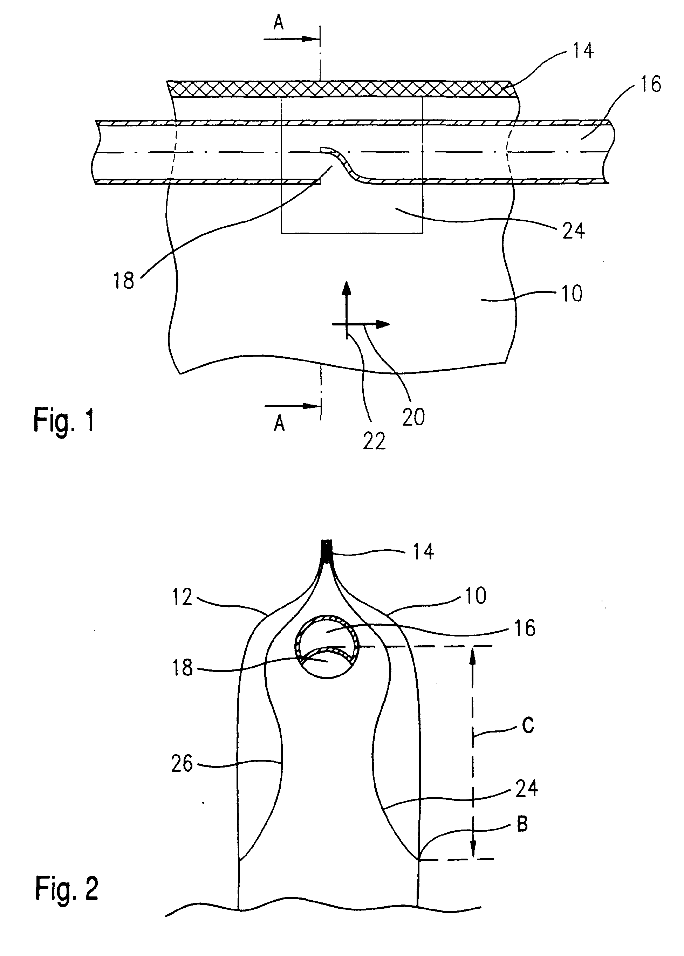

In Figur 1 ist ein Seitengassackmodul gezeigt, das eine erste Gewebelage 10 aufweist, die einen Teil der Gassackwandung bildet. Der dieser Gewebelage gegenüberliegende Teil der Wandung wird von einer in Figur 2 abgebildeten weiteren ersten Gewebelage 12 gebildet. Die beiden ersten Gewebelagen 10 und 12 sind an ihrem bezüglich Figur 1 oberen Ende mittels einer Verwebung 14 miteinander verbunden. Hierfür wird eine Panamabindung verwendet.

Entlang der Verwebung 14 der beiden ersten Gewebelagen 10 und 12 befindet sich eine Gaslanze 16 mit einer Gaseinströmöffnung 18. Die Gaslanze dient dazu, ein unter Druck stehendes Gas, das zum Entfalten des Gassacks bereitgestellt wird, im Inneren des Gassacks zu verteilen. In Figur 2 ist zu sehen, daß sich im Bereich der Öffnung 18 an jeder Seite der Wandung eine zusätzliche, zweite Gewebelage 24 bzw. 26 befindet (siehe auch Figur 1). Die beiden zweiten Gewebelagen 24 und 26 beginnen unterhalb der Verwebung 14 und werden an einem Punkt B, der sich im Abstand C von der Öffnung 18 befindet, wieder mit der entsprechenden ersten Gewebelage 10 oder 12 zu einer jeweiligen gemeinsamen Gewebelage vereinigt.

Jede zweite Gewebelage 24, 26 ist gebildet durch einen Teil der Schußfäden der ersten Gewebelage in diesem Bereich. Die zweite Gewebelage wird also in einfacher Weise dadurch hergestellt, daß beim Weben der Gewebelage 10, 12 ein Teil der Schußfäden von den übrigen Schußfäden ausgesondert wird. Dabei werden bevorzugterweise die Hälfte der Schußfäden der Gewebelage 10, 12 ausgesondert. Die für die erste Gewebelage "verbleibenden" Kett- und Schußfäden sind immer noch ausreichend für ein Gewebe, das die gewünschte mechanische und thermische Festigkeit sowie die geforderte Gasdichtigkeit hat.

Das Gewebe wird so für den Gassack verwendet, daß die Kettfäden 20 der Gassackwandung etwa parallel zu dem der Gaslanze entgegengesetzten Rand des Gassacks, hier also dem unteren Rand, verlaufen, während die Schußfäden 22 senkrecht dazu verlaufen.

Bei Zünden des Gasgenerators strömt heißes Gas, das Temperaturen bis zu 1400 K haben kann, durch die Gaslanze 16 und durch die Öffnung 18 in den Gassack. Bevor das heiße Gas in Berührung mit der ersten Gewebelage 10, 12 kommen kann, trifft es auf die zweite Gewebelage 24, 26, die sich direkt in Einströmrichtung vor der Öffnung 18 befindet. Somit ist ein direktes Auftreffen des heißen Gases auf die eigentliche Wandung des Gassacks und eine Beschädigung der Wandung verhindert. Selbst wenn die zweite Gewebelage gegen Ende des Entfaltungsvorgangs geschmolzen sein sollte, kann das heiße Gas in der verbleibenden kurzen Zeit des Entfaltungsvorgangs die erste Gewebelage 10, 12 nicht beschädigen.

Gemäß einer nicht dargestellten Weiterbildung kann die Gassackwandung z.B. mit einer Folie beschichtet sein, um unabhängig von der Webdichte der Gassackwandung eine ausreichende Gasdichtheit zu gewährleisten.

## Patentansprüche

1. Gassackmodul, insbesondere Seitengassackmodul für Fahrzeuginsassenrückhaltesysteme, mit mindestens einer ersten Gewebelage (10, 12), die eine Wandung eines Gassacks bilden, mit einer Gaslanze (16), in der sich Öffnungen (18) zum Einströmen eines Gases in den Gassack befinden, und mit mindestens einer zweiten Gewebelage (24), die sich im Bereich der Öffnungen (18) befindet und die durch einen Teil der Schußfäden der ersten Gewebelage (10, 12) gebildet ist.

2. Gassack nach Anspruch 1, **dadurch gekennzeichnet, daß** zwei erste Gewebelagen (10, 12) vorgesehen sind, die mindestens bereichsweise miteinander verwoben sind.

3. Gassack nach Anspruch 2, **dadurch gekennzeichnet, daß** die beiden ersten Gewebelagen (10, 12) durch eine Panamabindung miteinander verwoben sind.

4. Gassack nach einem der Ansprüche 1 bis 3, **dadurch gekennzeichnet, daß** die Schußfäden (22) der ersten Gewebelage (10, 12) etwa senkrecht zu einem der Gaslanze (16) entgegengesetzten Rand des Gassacks verlaufen und daß die Kettfäden (20) etwa parallel zu diesem Rand des Gassacks verlaufen.

5. Gassack nach einem der Ansprüche 1 bis 4, **dadurch gekennzeichnet, daß** die Wandung beschichtet ist.

6. Gassack nach einem der Ansprüche 1 bis 5, **dadurch gekennzeichnet, daß** die zweite Gewebelage (24) durch die Hälfte der Schußfäden der ersten Gewebelage (10, 12) gebildet ist.
